# EUROPÄISCHE PATENTSCHRIFT

(11) **EP 2 171 316 B1**
(45) Veröffentlichungstag und Bekanntmachung des Hinweises auf die Patenterteilung: **05.11.2014**
(21) Anmeldenummer: 08774697.0
(22) Anmeldetag: 03.07.2008
(51) Int. Cl.: F16H 61/16

(54) **VERFAHREN ZUR STEUERUNG EINES AUTOMATGETRIEBES EINES KRAFTFAHRZEUGES**
METHOD FOR CONTROLLING AN AUTOMATIC TRANSMISSION OF A MOTOR VEHICLE
PROCÉDÉ DE COMMANDE D'UNE BOÎTE DE VITESSES AUTOMATIQUE OU AUTOMATISÉE D'UN VÉHICULE À MOTEUR

(30) Priorität: 27.07.2007 DE 102007035297
(43) Veröffentlichungstag der Anmeldung: 07.04.2010
(73) Patentinhaber: ZF Friedrichshafen AG, 88038 Friedrichshafen (DE)
(72) Erfinder: WINKEL, Matthias, 88250 Weingarten (DE); JÄGER, Thomas, 88074 Meckenbeuren (DE); MAIR, Roland, 88069 Tettnang (DE); KNEER, Reiner, 88149 Nonnenhorn (DE)
(86) Internationale Anmeldenummer: PCT/EP2008/058576
(87) Internationale Veröffentlichungsnummer: WO 2009/015980

(56) Entgegenhaltungen:
- EP-A- 0 353 310
- EP-A1- 0 353 310
- DE-A1- 4 120 603
- DE-A1- 10 055 957
- DE-A1- 19 849 057
- DE-A1- 19 849 059

## Beschreibung

Die Erfindung betrifft ein Verfahren zur Steuerung eines Automatgetriebes eines Kraftfahrzeuges gemäß dem Oberbegriff des Patentanspruchs 1. Unter dem Begriff Automatgetriebe werden alle automatisch ihr Übersetzungsverhältnis ändernden Getriebe verstanden, also auch automatisierte Schaltgetriebe und Umschlingungsgetriebe.

Die Funktion "Ganghalten" bei Automatgetrieben in Antriebssträngen von Kraftfahrzeugen ist bereits bekannt. Dabei wird ein in einem automatischen Getriebemodus eigentlich vorgesehener Gangwechsel verhindert und ein aktuell eingelegter Gang bzw. ein aktuelles Übersetzungsverhältnis beibehalten. Um einen entsprechenden Fahrerwunsch zu realisieren, kann diese Funktion grundsätzlich über ein Steuergerät durch Interpretation des Fahrerwunsches anhand von Hilfsgrößen und Auswertealgorithmen automatisch oder über eine direkte Anforderung des Fahrers manuell aktiviert werden.

Bekannte Steuerungssysteme mit automatischer Aktivierung der Funktion verwenden die temporäre Beibehaltung eines Ganges innerhalb von Getriebesteuerungsprogrammen, beispielsweise um eine an einen individuellen Fahrstil des Fahrers, etwa eine betont sportliche oder betont ökonomische Fahrweise, angepasste Schaltsteuerung zu realisieren. Beispielhaft seien dazu die DE 197 33 464 B4 und die DE 43 25 296 A1 genannt. Das Dokument DE 100 55 957 A1 beschreibt den nächstliegenden Stand der Technik gemäß dem Oberbegriff der unabhängigen Ansprüche 1, 11 und 12. Dabei wird die Funktion "Ganghalten" sowohl automatisch aktiviert als auch deaktiviert. Diese Verfahren können zwar ein fahrerspezifisches Fahrerverhalten erkennen, sind jedoch nur begrenzt in der Lage auf wechselnde Fahrsituationen im Sinne der vorausschauenden Wahrnehmung eines Fahrers im aktuellen Fahrbetrieb zu reagieren und je nach momentaner Situation die Funktion "Ganghalten" auszulösen.

Bei der Funktion "Ganghalten" auf Fahreranforderung durch Auslösen des Fahrers, im Folgenden auch als "Hold Current Gear" oder einfach als Ganghaltefunktion bezeichnet, wird hingegen dem Fahrer die Möglichkeit gegeben, automatische durch die Getriebesteuerung ausgelöste bzw. berechnete Schaltungen direkt zu unterbinden, also einen gegenwärtig eingelegten Gang entgegen einem gegebenenfalls durch die Getriebesteuerung veranlassten Gangwechsel beizubehalten.

Der Hintergrund dafür ist, dass der Fahrer aufgrund seiner Wahrnehmungsmöglichkeiten Kenntnis von speziellen Streckenverhältnissen und/oder Randbedingungen erlangen kann, bei denen Schaltungen nicht erfolgen sollten bzw. sich in der aktuellen Betriebssituation nachteilig auswirken würden. Dies kann beispielsweise an Steigungen oder im Gefälle, im Stop-and-Go-Verkehr, in unwegsamem Gelände oder beim Rangieren vorkommen.

Der Fahrer kann die Anforderung "Hold Current Gear" dem Getriebesteuergerät in typischer Weise über ein Bedienelement signalisieren. Bei Bedienelementen, die ihren jeweiligen Schaltzustand direkt über ihre Schaltstellung, beispielsweise eine rastierbare Taste am Fahrschalter oder indirekt über eine Anzeige anzeigen, kann die Funktion grundsätzlich so lange aktiv bleiben, wie sich das Fahrzeug bzw. der Antriebsstrang mit dem festgehaltenen Gang in einem zulässigen Betriebsbereich befindet bzw. wie das Bedienelement es anzeigt. Dem Fahrer wird es dann überlassen, zu einem gegebenen Zeitpunkt durch Betätigen des Schalters die Funktion wieder zu beenden. Bei Schaltern, die die Ganghaltefunktion aktivieren, dies aber nicht explizit anzeigen, beispielsweise nicht rastierbare Tastschalter, ist in der Getriebesteuerung eine obligate Rückkehrbedingung vorgesehen, über die die Ganghaltefunktion beendet wird.

Meistens wird es dem Fahrer eher lästig sein, die von ihm per Bedienelement aktivierte Funktion nach dem Wegfallen des Grundes für die Aktivierung oder spätestens nach einer Aufforderung über eine Anzeige beim Verlassen des für den Gang zulässigen Bereichs stets wieder selbst durch erneutes Betätigen des Bedienelementes, beziehungsweise Entriegeln des Rastschalters, deaktivieren zu müssen. Zudem kann dies unnötig vom aktuellen Fahrgeschehen ablenken. In bestimmten Situationen kann es auch zwingend erforderlich sein, das die Getriebesteuerung eingreift und die Ganghaltefunktion unmittelbar beendet, um einen regulären Fahrbetrieb sicherzustellen bzw. einen erhöhten Verschleiß oder im Extremfall Getriebeschäden oder sonstige Schäden im Antriebsstrang auszuschließen. Daher ist es grundsätzlich komfortabler und zweckmäßiger, eine Beendigung der Ganghaltefunktion und Rückkehr in den regulären automatischen Getriebemodus der Getriebesteuerungssoftware mittels einer Rückkehrbedingung vorzusehen.

Es ist bekannt, die Rückkehr zum automatischen Fahrbetrieb chronologisch nach Ablauf einer festen Zeitspanne vorzugeben. Dieses sehr einfache Kriterium ist allerdings nicht immer sinnvoll und ausreichend, da die Anforderung zur Rückkehr zum automatischen Fahrbetrieb beispielsweise auch schon im Stillstand erfolgen kann, während noch eine Wartezeit bis zum Anfahren abgewartet werden muss. Beispiele dafür sind der Stillstand an einer Ampel oder einer Straßeneinmündung oder das Warten auf die Beendigung des Ein- oder Aussteigens von Fahrgästen an einer Bushaltestelle. In solchen Fällen würde die zeitliche Begrenzung der Funktion zumindest teilweise ablaufen bzw. ins Leere laufen, ohne dass sich das Fahrzeug in derjenigen erwarteten Fahrsituation befindet, für die das Ganghalten angefordert wurde. Eine derartige Situation, für die die Ganghaltefunktion angefordert wurde, kann beispielsweise eine große Steigung im vorausliegenden Streckenabschnitt sein. Eine ähnliche Situation wäre bei einem Stop-and-go-Betrieb in einer Steigung gegeben; die Funktion würde eventuell beendet, bevor die Steigung durchfahren wurde. Die Nutzung einer festen Zeitspanne ist daher als Rückkehrbedingung eher unvollkommen.

Vor diesem Hintergrund liegt der Erfindung die Aufgabe zugrunde, ein Verfahren zur Steuerung eines Automatgetriebes für ein Fahrzeug anzugeben, das bei einer auf Fahreranforderung aktivierbaren Ganghaltefunktion eine Rückkehrbedingung vorsieht, die stets eine effektive, betriebssichere und komfortable Nutzung und Beendigung der Ganghaltefunktion ermöglicht.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass in einer Getriebesteuerung eine flexible Rückkehrbedingung zur Rückkehr von einem vom Fahrer angeforderten Ganghaltemodus in einen automatischen Getriebemodus gegenüber einer starren Rückkehrbedingung wesentlich effektiver ist. Insbesondere kann mit einer an eine jeweilige Betriebs- bzw. Fahrsituation angepassten Rückkehrbedingung im Gegensatz zu einer Rückkehrbedingung mit einer festen Zeitspanne die Ganghaltefunktion gerade solange beibehalten werden, wie es in der jeweiligen Situation sinnvoll und vorteilhaft ist. Gegenüber einer nur vom Fahrer durchzuführenden manuellen Rückkehr bietet eine flexible Rückkehrbedingung erweiterte automatische Beendigungsmöglichkeiten und somit eine wesentlich komfortablere und zielgenauere Verwendung der Ganghaltefunktion.

Demnach geht die Erfindung aus von einem Verfahren zur Steuerung eines Automatgetriebes eines Kraftfahrzeuges, bei dem eine Ganghaltefunktion durch eine Fahreranforderung aktiviert wird und abhängig von einer Rückkehrbedingung deaktiviert wird.

Zur Lösung der gestellten Aufgabe sieht die Erfindung außerdem vor, dass die Rückkehrbedingung mit Hilfe wenigstens eines der folgenden Kriterien bestimmt wird:
a) einer flexiblen Zeitspanne mit Berücksichtigung von Stillstandszeiten des Fahrzeuges,
b) einer Motordrehzahl eines Antriebsmotors des Fahrzeuges oder einer oder mehrerer mit der Motordrehzahl korrelierter Größen,
c) einer neuen gleich- oder andersartigen Fahreranforderung,
d) einem Wechsel eines Betriebszustandes des Fahrzeuges, und
e) einer Plausibilitätsprüfung mit Berücksichtigung eines Anfahrvorganges.

Wie eingangs erwähnt werden unter dem Begriff Automatgetriebe alle Getriebe mit einer automatischen Übersetzungsänderung, beispielsweise auch Stufenautomaten mit automatischen Gangwechseln, verstanden. Unter einer Ganghaltefunktion wird das Beibehalten einer Getriebeübersetzung verstanden.

Die Erfindung schlägt vorteilhaft die Verwendung einer variablen Rückkehrbedingung vor, die mit einem geeigneten Verarbeitungs- und Steuerungsalgorithmus vorzugsweise innerhalb einer vorhandenen Getriebesteuerungseinrichtung ermittelt wird. Dabei werden relevante Sensordaten erfasst und soweit jeweils erforderlich verwendet, sowie bestimmte Kriterien überwacht und ausgewertet, mit der Absicht, die temporäre Ganghaltefunktion zielgenau zu beenden, wenn ihr jeweiliger Anforderungszweck erfüllt ist und/oder das weitere Beibehalten des eingelegten Ganges sich ungünstig auswirken könnte. Dem jeweiligen Fahrerwunsch wird dabei soweit wie möglich entsprochen. Im Folgenden wird das erfindungsgemäße Verfahren an bevorzugten Ausführungsformen näher erläutert.

Nach einer ersten bevorzugten Ausführungsform des Verfahrens läuft eine Zeitspanne für die Ganghaltefunktion nur dann, wenn sich das Fahrzeug in Fahrt befindet. Dadurch haben die eingangs erwähnten Stillstandszeiten keinen Einfluss auf die Funktion. Um auch einen Stop-and-Go-Betrieb abzudecken ist es vorteilhaft, einen Zeitzähler für die Zeitspanne der Ganghaltefunktion bei Stillstand nicht nur anzuhalten sondern (auf Null) zurückzusetzen. Damit ist die vorgegebene Zeitspanne eine im Fahrbetrieb wirksame Nettozeit der Ganghaltefunktion mit anschließender automatischer Beendigung der Funktion.

Anstelle eines solchen Zeitkriteriums oder gegebenenfalls in Kombination mit einem solchen Zeitkriterium, können antriebsrelevante Kriterien eine noch variablere und genauere Rückkehrbedingung zur Verfügung stellen. Besonders vorteilhaft ist es, auf die Drehzahl eines mit dem Getriebe kraftschlüssig verbindbaren Verbrennungsmotors bezogene Kriterien zur Bestimmung der Rückkehrbedingung heranzuziehen.

Demnach kann vorgesehen sein, dass die Ganghaltefunktion automatisch deaktiviert wird, wenn ein vorab bestimmter antriebsrelevanter oberer Schwellwert überschritten oder ein vorab bestimmter antriebsrelevanter unterer Schwellwert unterschritten wird.

Ein derartiger antriebsrelevanter Schwellwert kann vorteilhaft eine bestimmte Motordrehzahl des mit dem Getriebe verbundenen Verbrennungsmotors sein. Beispielsweise kann ein oberer Schwellwert überschritten werden, wenn die Motordrehzahl in die Nähe einer vorgesehenen elektronischen Leistungsabregelungsgrenze des Antriebsmotors kommt, also wenn eine Überschussleistung verfügbar ist. Im unteren Drehzahlbereich kann ein unterer Schwellwert unterschritten werden, wenn die Motordrehzahl in die Nähe einer Leerlaufdrehzahl kommt, also das Antriebsmoment nicht mehr ausreicht, um die Drehzahl zu halten. In diesen Fällen ist es nicht sinnvoll, den aktuell eingelegten Gang weiter beizubehalten, so dass das Getriebe ohne zutun des Fahrers in den automatischen Schaltmodus zurückkehrt.

Analog dazu kann die Motordrehzahl auch durch andere, die Motordrehzahl beschreibende Signale ersetzt werden. Dies können insbesondere sein eine Getriebeeingangsdrehzahl, eine Getriebeabtriebsdrehzahl, gewichtet mit der zugehörigen Getriebeübersetzung im eingelegten Gang, oder die Fahrzeuggeschwindigkeit, gewichtet mit einem zugehörigen Getriebe-, Rad-, und Achsübersetzungs-Umrechnungsfaktor. Aus diesen Größen lassen sich ebenfalls Schwellwerte für eine oben definierte Rückkehrbedingung ableiten.

Die genannten Drehzahlgrenzen bzw. Schwellwerte können auch abhängig von einem Fahrerwunsch einstellbar sein, der beispielsweise durch ein aktiviertes Fahrpedal, ein aktiviertes Bremspedal oder eine aktivierte Sekundärbremse signalisiert und erkannt wird. Damit kann insbesondere der Fall Zugbetrieb (Fahren in einer Steigung bzw. Fahren in einer Ebene) vom Fall Schubbetrieb (Fahren bzw. Bremsen im Gefälle) getrennt behandelt werden. Es ist auch möglich, auf diese Weise die Intensität des Fahrerwunsches zu berücksichtigen.

Weiterhin ist es auch möglich, dass der Fahrer selbst die Ganghaltefunktion beendet. Gegenüber einer Betätigung eines speziellen Schalters bietet die Rückkehrbedingung dazu jedoch wesentlich erweiterte und komfortablere Möglichkeiten. Demnach ist es zweckmäßig die Ganghaltefunktion zu beenden, wenn eine neue, also andersartige Anforderung an das Getriebe bzw. das Fahrzeug vom Fahrer empfangen wird. Eine solche Fahreranforderung kann beispielsweise den aktuellen Gang korrigieren, etwa durch ein- oder mehrmaliges Antippen eines Wählhebels in Plus- oder Minusrichtung zum sequentiellen Hoch- oder Runterschalten des Getriebes. Es kann auch ein Automatikmodus explizit angefordert werden. Diese Fahreranforderungen zeigen der Getriebesteuerung direkt den Fahrerwunsch an, die bis dahin noch aktive Ganghaltefunktion zu beenden, mit der Folge der entsprechenden automatischen Deaktivierung der Ganghaltefunktion.

Eine andere Fahreranforderung kann sich durch eine Änderung der Fahrtrichtung äußern, signalisiert beispielsweise durch die Betätigung eines Schalters für den Fahrtrichtungsanzeiger oder durch einen Lenkwinkelsensor. Eine weitere Fahreranforderung kann ein Kickdown sein, also ein Durchtreten des Fahrpedals zur Betätigung eines Kickdown-Schalters, in der Regel mit der Folge einer Rückschaltung des Getriebes um zumindest eine Gangstufe. Auch diese Fahreranforderungen zeigen den Fahrerwunsch an, die Ganghaltefunktion zu beenden.

Bei einer erneuten Anforderung der Ganghaltefunktion durch den Fahrer bestehen dagegen zwei Möglichkeiten. Einerseits kann die Getriebesteuerung so eingestellt sein, dass die erneute Fahreranforderung zum Ganghalten als unmittelbar wirksame Rückkehrbedingung interpretiert wird.

Es ist jedoch auch möglich, bei einer erneuten Fahreranforderung zum Ganghalten die Zeitspanne für die Ganghaltefunktion zu verlängern, also die Rückkehrbedingung zu verzögern. Dies kann beispielsweise durch Zurücksetzen des Zeitzählers, also einen erneuten Start der Zeitspanne oder durch eine Erhöhung der Zeitspanne des Zeitzählers um ein vorgegebenes Inkrement erfolgen. Bei der letztgenannten Variante kann der Fahrer das Ganghalten vorteilhaft verlängern, wenn für ihn absehbar ist, dass die normale Zeitdauer der Funktion nicht ausreichend ist.

Außerdem kann vorgesehen sein, dass die Ganghaltefunktion deaktiviert wird, wenn ein temporärer Betriebszustand, für den die Ganghaltefunktion angefordert wurde, beendet ist. Will der Fahrer mittels der Ganghaltefunktion eine temporäre Situation beherrschen, beispielsweise keine Schaltung bei einer Fahrt in einer Steigung oder im Gefälle zulassen, so kann man davon ausgehen, dass bei einer Beendigung dieses Betriebszustandes bzw. beim Wechsel in einen anderen Betriebszustand auch die auslösende Situation für das Ganghalten und damit der entsprechende Fahrerwunsch beendet ist.

Wurde die Ganghaltefunktion beispielsweise im Zugbetrieb aktiviert, so wird sie beendet, wenn Schubbetrieb herrscht, was beispielsweise dadurch signalisiert wird, dass nunmehr keine Fahrpedalbetätigung aber gegebenenfalls eine Bremsbetätigung erfolgt. Wurde die Ganghaltefunktion hingegen im Schubbetrieb aktiviert, wird sie beendet wenn Zugbetrieb herrscht, was beispielsweise dadurch signalisiert wird, dass nunmehr keine Bremsbetätigung aber eine Fahrpedalbetätigung erfolgt. Dadurch kann die Ganghaltefunktion zum einen bei einer Bergfahrt/Talfahrt besonders effektiv und zielgerichtet eingesetzt werden. Zum anderen wird die Ganghaltefunktion bei einem Wechsel zwischen einer Bergfahrt und einer Talfahrt bzw. zwischen einer Bergfahrt/Talfahrt und einer Ebenenfahrt, also einer Fahrt in einer Ebene, auch nicht unnötig lange eingesetzt und auf komfortable Weise beendet.

Weiterhin ist es vorteilhaft, für Anfahrvorgänge die Ganghaltefunktion betreffende Maßnahmen vorzusehen. Insbesondere kann vorgesehen sein, dass bei einem Anfahrvorgang die Ganghaltefunktion deaktiviert wird, wenn eine Plausibilitätsprüfung ergibt, dass der durch eine Fahreranforderung aktuell gehaltene Gang für einen Anfahrvorgang ungeeignet ist.

Wurde die Ganghaltefunktion während der Fahrt aktiviert und ist der eingelegte Gang kein passender Anfahrgang, so muss nach dem beziehungsweise beim Anhalten, trotz der aktivierten Funktion "Ganghalten", eine automatische Anfahrgangschaltung ausgeführt werden. Beispielsweise kann das Anfahren im fixierten Gang unzulässig sein, um die Gefahr eines übermäßigen Verschleißes oder sogar einer Beschädigung der Kupplung bzw. des Getriebes zu verhindern. Möglicherweise ist der fixierte Gang zu groß, so dass die Übersetzung ein Anfahren gänzlich unmöglicht macht, ohne den Motor dabei abzuwürgen. In diesen Fällen veranlasst die Getriebesteuerung zumindest den Wechsel in einen passenden Anfahrgang.

Umgekehrt kann vorgesehen sein, dass bei einem Anfahrvorgang der durch eine Fahreranforderung aktuell gehaltene Gang priorisiert wird, wenn eine Plausibilitätsprüfung ergibt, dass dieser Gang für einen Anfahrvorgang geeignet ist. Dadurch kann ein eventuell beim Anhalten fortbestehender Ganghaltewunsch auch beim Anfahren aufrechterhalten werden. Die Ganghaltefunktion bleibt also aktiv, in der Folge wird in diesem Anfahrgang verblieben. Alle vermeidbaren Schaltungen werden unterdrückt.

Möglich ist auch eine prinzipielle Deaktivierung der bei der Fahrt aktivierten Ganghaltefunktion sobald Stillstand des Fahrzeugs erreicht wird.

Schließlich ist es auch möglich, dass bei einem Anfahrvorgang ein Bereich automatisch schaltbarer Gänge nach oben auf denjenigen Gang begrenzt wird, bei dem die Ganghaltefunktion aktiviert wurde. In diesem Fall werden alle von der Getriebesteuerung in der Automatikmodus-Routine gegebenenfalls angeforderten Schaltungen unter Berücksichtigung der Gangbegrenzung ausgeführt.

Um die Rückkehrbedingung für die verschiedenen im praktischen Fahrbetrieb vorkommenden Betriebssituationen, in denen eine Nutzung der Ganghaltefunktion vorteilhaft erscheint, möglichst sensitiv, betriebssicher und komfortabel einzustellen, wird der Fachmann die erläuterten Kriterien einzeln oder - soweit sie sich nicht gegenseitig ausschließen - in sinnvoller Weise miteinander kombinieren.

## Patentansprüche

1. Verfahren zur Steuerung eines Automatgetriebes eines Kraftfahrzeuges, bei dem eine Ganghaltefunktion durch eine Fahreranforderung aktiviert wird und abhängig von einer Rückkehrbedingung deaktiviert wird, **dadurch gekennzeichnet, dass** die Rückkehrbedingung mit Hilfe wenigstens eines der folgenden Kriterien bestimmt wird:
a) einer flexiblen Zeitspanne mit Berücksichtigung von Stillstandszeiten des Fahrzeuges und
b) einer Plausibilitätsprüfung mit Berücksichtigung eines Anfahrvorganges, wobei durch die Plausibilitätsprüfung festgestellt wird, ob der durch eine Fahreranforderung aktuell gehaltene Gang für einen Anfahrvorgang geeignet oder ungeeignet ist.

2. Verfahren nach Anspruch 1, **dadurch gekennzeichnet, dass** bei der Aktivierung der Ganghaltefunktion ein Zeitzähler gestartet und die Ganghaltefunktion nach Ablauf einer vorgegebenen Zeitspanne beendet wird, wobei der Zeitzähler bei Fahrzeugstillständen jeweils angehalten wird.

3. Verfahren nach Anspruch 2, **dadurch gekennzeichnet, dass** bei einem Fahrzeugstillstand der Zeitzähler jeweils auf den Wert Null zurückgesetzt wird.

4. Verfahren nach zumindest einem der Ansprüche 1 bis 3, **dadurch gekennzeichnet, dass** die Ganghaltefunktion deaktiviert wird, wenn erneut eine Fahreranforderung zum Ganghalten registriert wird.

5. Verfahren nach zumindest einem der Ansprüche 1 bis 3, **dadurch gekennzeichnet, dass** die Zeitspanne der Ganghaltefunktion verlängert wird, wenn erneut eine Fahreranforderung zum Ganghalten registriert wird.

6. Verfahren nach Anspruch 5, **dadurch gekennzeichnet, dass** bei einer erneuten Fahreranforderung zum Ganghalten der Zeitzähler zurückgesetzt wird.

7. Verfahren nach Anspruch 5, **dadurch gekennzeichnet, dass** bei einer erneuten Fahreranforderung zum Ganghalten die Zeitspanne des Zeitzählers um ein vorgegebenes Inkrement erhöht wird.

8. Verfahren nach zumindest einem der Ansprüche 1 bis 7, **dadurch gekennzeichnet, dass** bei einem Anfahrvorgang die Ganghaltefunktion deaktiviert wird, wenn die Plausibilitätsprüfung ergibt, dass der durch eine Fahreranforderung aktuell gehaltene Gang für einen Anfahrvorgang ungeeignet ist.

9. Verfahren nach zumindest einem der Ansprüche 1 bis 7, **dadurch gekennzeichnet, dass** bei einem Anfahrvorgang der durch eine Fahreranforderung aktuell gehaltene Gang priorisiert wird, wenn die Plausibilitätsprüfung ergibt, dass dieser Gang für einen Anfahrvorgang geeignet ist.

10. Verfahren nach zumindest einem der Ansprüche 1 bis 9, **dadurch gekennzeichnet, dass** bei einem Anfahrvorgang ein Bereich automatisch schaltbarer Gänge nach oben auf den Gang begrenzt wird, bei dem die Ganghaltefunktion aktiviert wurde.

11. Verfahren zur Steuerung eines Automatgetriebes eines Kraftfahrzeuges, bei dem eine Ganghaltefunktion durch eine Fahreranforderung aktiviert wird und abhängig von einer Rückkehrbedingung deaktiviert wird, wobei die Rückkehrbedingung mit Hilfe einer neuen andersartigen Fahreranforderung bestimmt wird **dadurch gekennzeichnet, dass** die Ganghaltefunktion deaktiviert wird, wenn die registrierte Fahreranforderung mit einem Fahrtrichtungswechsel einhergeht.

12. Verfahren zur Steuerung eines Automatgetriebes eines Kraftfahrzeuges, bei dem eine Ganghaltefunktion durch eine Fahreranforderung aktiviert wird und abhängig von einer Rückkehrbedingung deaktiviert wird, wobei die Rückkehrbedingung mit Hilfe eines Wechsels eines Betriebszustandes des Fahrzeuges bestimmt wird **dadurch gekennzeichnet, dass** die Ganghaltefunktion deaktiviert wird, wenn ein temporärer Betriebszustand, für den die Ganghaltefunktion angefordert wurde, beendet ist und ein Wechsel zwischen einer Bergfahrt und einer Talfahrt oder zwischen einer Bergfahrt/Talfahrt und einer Ebenenfahrt erfolgt.

## Claims

1. Method of controlling an automatic transmission of a motor vehicle, in which a gear speed-holding function is activated by a driver request and is deactivated as a function of a return condition, **characterized in that** the return condition is determined by means of at least one of the following criteria:
a) a flexible time period taking into account stationary times of the vehicle, and
b) a plausibility check taking into account a starting process, wherein by means of the plausibility check it is determined whether the gear speed which is currently being held by means of a driver request is suitable or unsuitable for a starting process.

2. Method according to Claim 1, **characterized in that** when the gear speed-holding function is activated a timer is started and the gear speed-holding function is ended after the expiry of a predefined time period, wherein the timer is respectively stopped in stationary states of the vehicle.

3. Method according to Claim 2, **characterized in that** in the case of a stationary state of the vehicle the timer is reset in each case to the value zero.

4. Method according to at least one of Claims 1 to 3, **characterized in that** the gear speed-holding function is deactivated if a driver request to hold the gear speed is registered again.

5. Method according to at least one of Claims 1 to 3, **characterized in that** the time period of the gear speed-holding function is prolonged if a driver request to hold the gear speed is registered again.

6. Method according to Claim 5, **characterized in that** in the case of a renewed driver request to hold the gear speed the timer is reset.

7. Method according to Claim 5, **characterized in that** in the case of a renewed driver request to hold the gear speed the time period of the timer is increased by a predefined increment.

8. Method according to at least one of Claims 1 to 7, **characterized in that** in the case of a starting process the gear speed-holding function is deactivated if the plausibility check reveals that the gear speed which is currently being held by means of a driver request is unsuitable for a starting request.

9. Method according to at least one of Claims 1 to 7, **characterized in that** in the case of a starting process the gear speed which is currently being held by means of a driver request is prioritized if the plausibility check reveals that this gear speed is suitable for a starting process.

10. Method according to at least one of Claims 1 to 9, **characterized in that** in the case of a starting process a range of automatically shiftable gear speeds in the upward direction is limited to the gear speed at which the gear speed-holding function was activated.

11. Method for controlling an automatic transmission of a motor vehicle in which a gear speed-holding function by means of a driver request is activated and is deactivated as a function of a return condition, wherein the return condition is determined by means of a new driver request of some other type, **characterized in that** the gear speed-holding function is deactivated if the registered driver request coincides with a change of the direction of travel.

12. Method for controlling an automatic transmission of a motor vehicle, in which a gear speed-holding function by is activated by a driver request and is deactivated as a function of a return condition, wherein the return condition is determined by means of a changeover of an operating state of the vehicle, **characterized in that** the gear speed-holding function is deactivated if a temporary operating state for which the gear speed-holding function has been requested is ended and a changeover occurs between uphill travel and downhill travel or between downhill/uphill travel and travel on the flat.

## Revendications

1. Procédé de commande d'une boîte de vitesses automatique d'un véhicule à moteur, dans lequel une fonction de maintien de rapport est activée par une demande de conducteur et est désactivée en fonction d'une condition de rebroussement, **caractérisé en ce que** la condition de rebroussement est déterminée à l'aide d'au moins un des critères suivantes :
a) d'un intervalle de temps flexible prenant en compte les temps d'arrêt du véhicule ; et
b) d'un contrôle de plausibilité prenant en compte un processus de démarrage, le contrôle de plausibilité permettant de déterminer si le rapport actuellement maintenu par une demande de conducteur est adapté ou non adapté à un processus de démarrage.

2. Procédé selon la revendication 1, **caractérisé en ce qu'**en cas d'activation de la fonction de maintien de rapport, un compteur de temps est démarré et que la fonction de maintien de rapport prend fin après écoulement d'un intervalle de temps prédéfini, le compteur de temps étant respectivement maintenu pendant les arrêts du véhicule.

3. Conduite en marche avant selon la revendication 2, **caractérisée en ce qu'**en cas d'arrêt du véhicule, le compteur de temps est respectivement ramené à la valeur de zéro.

4. Procédé selon au moins l'une quelconque des revendications 1 à 3, **caractérisé en ce que** la fonction de maintien de rapport est désactivée lorsqu'une demande de maintien de vitesse du conducteur est à nouveau enregistrée.

5. Procédé selon au moins l'une quelconque des revendications 1 à 3, **caractérisé en ce que** l'intervalle de temps de la fonction de maintien de rapport est rallongé lorsqu'une demande de maintien de vitesse du conducteur est à nouveau enregistrée.

6. Procédé selon la revendication 5, **caractérisé en ce qu'**en cas de renouvellement de la demande de maintien de vitesse du conducteur, le compteur de temps est réinitialisé.

7. Procédé selon la revendication 5, **caractérisé en ce qu'**en cas de renouvellement de la demande de maintien de vitesse du conducteur, l'intervalle de temps du compteur de temps est augmenté d'un incrément prédéfini.

8. Procédé selon au moins l'une quelconque des revendications 1 à 7, **caractérisé en ce qu'**en présence d'un processus de démarrage, la fonction de maintien de rapport est désactivée lorsque le contrôle de plausibilité montre que le rapport actuellement maintenu par une demande de conducteur n'est pas adapté à un processus de démarrage.

9. Procédé selon au moins l'une quelconque des revendications 1 à 7, **caractérisé en ce qu'**en présence d'un processus de démarrage, le rapport actuellement maintenu par une demande de conducteur est prioritaire lorsque le contrôle de plausibilité montre que ce rapport est adapté à un processus de démarrage.

10. Procédé selon au moins l'une quelconque des revendications 1 à 9, **caractérisé en ce qu'**en présence d'un processus de démarrage, une plage de rapports pouvant être automatiquement passés est délimitée vers le haut par le rapport auquel la fonction de maintien de rapport a été activée.

11. Procédé de commande d'une boîte de vitesses automatique d'un véhicule à moteur, dans lequel une fonction de maintien de rapport est activée par une demande de conducteur et est désactivée en fonction d'une condition de rebroussement, la condition de rebroussement étant déterminée à l'aide d'une nouvelle demande de conducteur d'un autre type, **caractérisé en ce que** la fonction de maintien de rapport est désactivée lorsque la demande de conducteur enregistré s'accompagne d'un changement de direction de conduite.

12. Procédé de commande d'une boîte de vitesses automatique d'un véhicule à moteur, dans lequel une fonction de maintien de rapport est activée par une demande de conducteur et est désactivée en fonction d'une condition de rebroussement, la condition de rebroussement étant déterminée à l'aide d'un changement d'état de fonctionnement du véhicule, **caractérisé en ce que** la fonction de maintien de rapport est désactivée lorsqu'un état de fonctionnement temporaire pour lequel la fonction de maintien de rapport serait demandée prendre fin et qu'un changement entre une conduite en montée et une conduite en pente ou entre une conduite en montée/conduite en pente et une conduite à plat se produit.
